# EUROPEAN PATENT APPLICATION

(11) **EP 3 310 104 A1**
(43) Date of publication of application: **18.04.2018**
(21) Application number: 17794204.2
(22) Date of filing: 10.08.2017
(51) Int. Cl.: H04W 68/02, H04W 74/08, H04L 5/00, H04W 28/02, H04W 52/02, H04L 27/26, H04W 72/02, H04W 72/04

(54) **METHOD FOR RECEIVING PAGING SIGNAL IN NB-IOT AND METHOD FOR PERFORMING RANDOM ACCESS PROCEDURE IN NB-IOT**

(30) Priority: 10.08.2016 US 201662372805 P; 10.08.2016 US 201662373341 P; 27.09.2016 US 201662400597 P; 07.10.2016 US 201662405268 P
(71) Applicant: LG Electronics Inc., Seoul 07336 (KR)
(72) Inventor: HWANG, Seunggye, Seoul 06772 (KR); AHN, Joonkui, Seoul 06772 (KR); YI, Yunjung, Seoul 06772 (KR)
(74) Representative: Ter Meer Steinmeister & Partner
(86) International application number: PCT/KR2017/008681
(87) International publication number: WO 2018/030809

(57) **Abstract**

The disclosure of the present disclosure provides a method for receiving a paging signal by a wireless device supporting narrowband-internet of things (NB-IoT) radio access technology (RAT). The method comprises receiving weight values for uneven paging distribution; selecting one in a list of carriers, each of which includes a non-anchor physical resource block (PRB), according to the weight values; and receiving the paging signal via the selected non-anchor PRB. Here, the non-anchor PRB may allow the wireless device to assume that at least one or more predetermined signals are to be not transmitted, but the paging signal is to be transmitted.

## Description

### BACKGROUND OF THE INVENTION

### Field of the invention

The present invention relates to mobile communication.

### Related Art

3rd generation partnership project (3GPP) long term evolution (LTE) evolved from a universal mobile telecommunications system (UMTS) is introduced as the 3GPP release 8. The 3GPP LTE uses orthogonal frequency division multiple access (OFDMA) in a downlink, and uses single carrier-frequency division multiple access (SC-FDMA) in an uplink. The 3GPP LTE employs multiple input multiple output (MIMO) having up to four antennas. In recent years, there is an ongoing discussion on 3GPP LTE-advanced (LTE-A) evolved from the 3GPP LTE.

As disclosed in 3GPP TS 36.211 V10.4.0 (2011-12) "Evolved Universal Terrestrial Radio Access (E-UTRA); Physical Channels and Modulation (Release 10)", a physical channel of LTE may be classified into a downlink channel, i.e., a PDSCH (Physical Downlink Shared Channel) and a PDCCH (Physical Downlink Control Channel), and an uplink channel, i.e., a PUSCH (Physical Uplink Shared Channel) and a PUCCH (Physical Uplink Control Channel).

Meanwhile recently, Internet of Things (IoT) communication has been attracted. The IoT refers to communications that do not involve human interaction. A discussion is beginning to be made to accommodate such IoT communications in a cellular-based LTE system.

However, since the existing LTE system has been designed for the purpose of supporting high-speed data communication, it has been regarded as an expensive communication method.

However, IoT communication can be widely used only if the price is low due to its characteristics.

Thus, there have been discussions to reduce bandwidth as part of cost savings. This is referred to as a NB (narrow band) IoT. The NB IoT can communicate using only one PRB (Physical Resource Block).

However, when only one PRB is used, the paging signal is concentrated in one PRB, and thus an overload issue may occur. In addition, the traffic associated with the random access procedure is concentrated in one PRB, and thus an overload issue may occur.

### SUMMARY OF THE INVENTION

Accordingly, a disclosure of the present specification has been made in an effort to solve the aforementioned problem.

To achieve the foregoing purposes, the disclosure of the present invention proposes a method for receiving a paging signal. The method may be performed by a wireless device supporting a narrowband-internet of things (NB-IoT) radio access technology (RAT) and comprise: receiving weight values for uneven paging distribution; selecting one in a list of carriers, each of which includes a non-anchor physical resource block (PRB), according to the weight values; and receiving the paging signal via the selected non-anchor PRB. The non-anchor PRB may allow the wireless device to assume that at least one or more predetermined signals are to be not transmitted, but the paging signal is to be transmitted.

In the selection step, an identifier of the wireless device may be used. In the selection step, timing information may be further considered. Here, the timing information may include a system frame number (SFN).

The method may further include: receiving the list of carriers.

The weight values may be received in form of a list.

The weight values in the list may be arranged based on an order of PRBs.

The weight values may be received via a radio resource control (RRC) signal.

The predetermined signal may include at least one of: a narrowband primary synchronization signal (NPSS), a narrowband secondary synchronization signal (NSSS), a narrowband physical broadcast channel (NPBCH) and a system information block (SIB) for a narrowband.

To achieve the foregoing purposes, the disclosure of the present invention proposes a method for performing random access procedure by a wireless device supporting a narrowband-internet of things (NB-IoT) radio access technology (RAT). The method may comprise a step of receiving a list of carrier including a non-anchor physical resource block (PRB); selecting a PRB to perform random access procedure in the list; and performing the random access procedure through the selected PRB.

In the selection step, at least one of coverage extension (CE) level and the identifier of the wireless device may be considered.

The PRB to perform the random access may comprise an uplink PRB to transmit a random access preamble, and a downlink PRB to receive a random access response (RAR).

To achieve the foregoing purposes, the disclosure of the present invention proposes a wireless device for receiving a paging signal. The wireless device may support a narrowband-internet of things (NB-IoT) radio access technology (RAT) and comprise: a transceiver; and a processor configured to control the transceiver and perform steps of: receiving weight values for uneven paging distribution; selecting one in a list of carriers, each of which includes a non-anchor physical resource block (PRB), according to the weight values; and receiving the paging signal via the selected non-anchor PRB. The non-anchor PRB may allow the wireless device to assume that at least one or more predetermined signals are to be not transmitted, but the paging signal is to be transmitted.

According to the disclosure of the present invention, the problem of the conventional technology described above may be solved.

### BRIEF DESCRIPTION OF THE DRAWINGS

FIG. 1 is a wireless communication system.
FIG. 2 illustrates a structure of a radio frame according to FDD in 3GPP LTE.
FIG. 3 is a flowchart illustrating a random access procedure in 3GPP LTE.
FIG. 4A illustrates an example of IoT (Internet of Things) communication.
FIG. 4B is an illustration of cell coverage expansion or augmentation for an IoT device.
FIG. 5A and 5B are diagrams illustrating examples of sub-bands in which IoT devices operate.
FIG. 6 illustrates an example of time resources that can be used for NB-IoT in M-frame units.
FIG. 7 is another illustration representing time resources and frequency resources that can be used for NB IoT.
FIG. 8 is a flowchart illustrating an example of non-uniformly selecting PRBs according to one embodiment of a first disclosure
FIG. 9 is a block diagram illustrating a wireless communication system in which the present disclosure is implemented.

### DESCRIPTION OF EXEMPLARY EMBODIMENTS

Hereinafter, based on 3rd Generation Partnership Project (3GPP) long term evolution (LTE) or 3GPP LTE-advanced (LTE-A), the present invention will be applied. This is just an example, and the present invention may be applied to various wireless communication systems. Hereinafter, LTE includes LTE and/or LTE-A.

The technical terms used herein are used to merely describe specific embodiments and should not be construed as limiting the present invention. Further, the technical terms used herein should be, unless defined otherwise, interpreted as having meanings generally understood by those skilled in the art but not too broadly or too narrowly. Further, the technical terms used herein, which are determined not to exactly represent the spirit of the invention, should be replaced by or understood by such technical terms as being able to be exactly understood by those skilled in the art. Further, the general terms used herein should be interpreted in the context as defined in the dictionary, but not in an excessively narrowed manner.

The expression of the singular number in the present invention includes the meaning of the plural number unless the meaning of the singular number is definitely different from that of the plural number in the context. In the following description, the term 'include' or 'have' may represent the existence of a feature, a number, a step, an operation, a component, a part or the combination thereof described in the present invention, and may not exclude the existence or addition of another feature, another number, another step, another operation, another component, another part or the combination thereof.

The terms 'first' and 'second' are used for the purpose of explanation about various components, and the components are not limited to the terms 'first' and 'second'. The terms 'first' and 'second' are only used to distinguish one component from another component. For example, a first component may be named as a second component without deviating from the scope of the present invention.

It will be understood that when an element or layer is referred to as being "connected to" or "coupled to" another element or layer, it can be directly connected or coupled to the other element or layer or intervening elements or layers may be present. In contrast, when an element is referred to as being "directly connected to" or "directly coupled to" another element or layer, there are no intervening elements or layers present.

Hereinafter, exemplary embodiments of the present invention will be described in greater detail with reference to the accompanying drawings. In describing the present invention, for ease of understanding, the same reference numerals are used to denote the same components throughout the drawings, and repetitive description on the same components will be omitted. Detailed description on well-known arts which are determined to make the gist of the invention unclear will be omitted. The accompanying drawings are provided to merely make the spirit of the invention readily understood, but not should be intended to be limiting of the invention. It should be understood that the spirit of the invention may be expanded to its modifications, replacements or equivalents in addition to what is shown in the drawings.

As used herein, 'base station' generally refers to a fixed station that communicates with a wireless device and may be denoted by other terms such as eNB (evolved-NodeB), BTS (base transceiver system), or access point.

As used herein, 'user equipment (UE)' may be stationary or mobile, and may be denoted by other terms such as device, wireless device, terminal, MS (mobile station), UT (user terminal), SS (subscriber station), MT (mobile terminal) and etc.

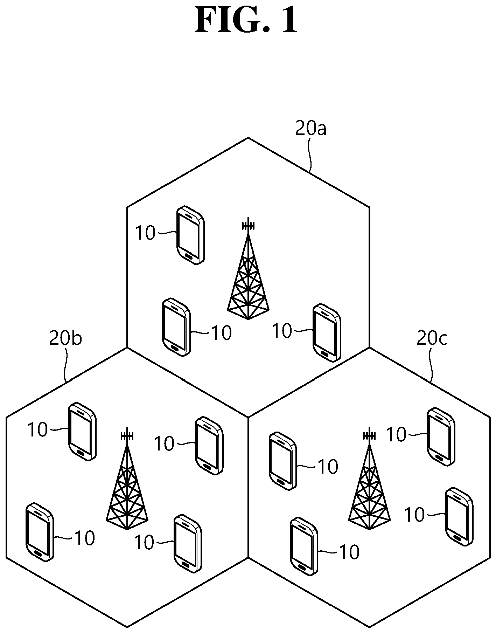

FIG. 1 illustrates a wireless communication system.

As seen with reference to FIG. 1, the wireless communication system includes at least one base station (BS) 20. Each base station 20 provides a communication service to specific geographical areas (generally, referred to as cells) 20a, 20b, and 20c. The cell can be further divided into a plurality of areas (sectors).

The UE generally belongs to one cell and the cell to which the UE belong is referred to as a serving cell. A base station that provides the communication service to the serving cell is referred to as a serving BS. Since the wireless communication system is a cellular system, another cell that neighbors to the serving cell is present. Another cell which neighbors to the serving cell is referred to a neighbor cell. A base station that provides the communication service to the neighbor cell is referred to as a neighbor BS. The serving cell and the neighbor cell are relatively decided based on the UE.

Hereinafter, a downlink means communication from the base station 20 to the UE 10 and an uplink means communication from the UE 10 to the base station 20. In the downlink, a transmitter may be a part of the base station 20 and a receiver may be a part of the UE 10. In the uplink, the transmitter may be a part of the UE 10 and the receiver may be a part of the base station 20.

Meanwhile, the wireless communication system may be generally divided into a frequency division duplex (FDD) type and a time division duplex (TDD) type. According to the FDD type, uplink transmission and downlink transmission are achieved while occupying different frequency bands. According to the TDD type, the uplink transmission and the downlink transmission are achieved at different time while occupying the same frequency band. A channel response of the TDD type is substantially reciprocal. This means that a downlink channel response and an uplink channel response are approximately the same as each other in a given frequency area. Accordingly, in the TDD based wireless communication system, the downlink channel response may be acquired from the uplink channel response. In the TDD type, since an entire frequency band is time-divided in the uplink transmission and the downlink transmission, the downlink transmission by the base station and the uplink transmission by the terminal may not be performed simultaneously. In the TDD system in which the uplink transmission and the downlink transmission are divided by the unit of a subframe, the uplink transmission and the downlink transmission are performed in different subframes.

Hereinafter, the LTE system will be described in detail.

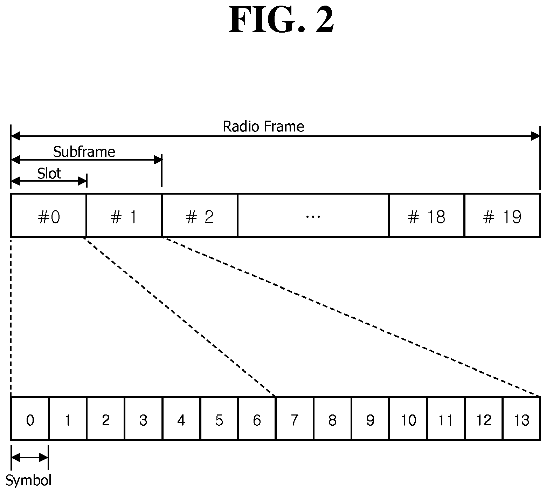

FIG. 2 shows a downlink radio frame structure according to FDD of 3rd generation partnership project (3GPP) long term evolution (LTE).

The radio frame includes 10 sub-frames indexed 0 to 9. One sub-frame includes two consecutive slots. Accordingly, the radio frame includes 20 slots. The time taken for one sub-frame to be transmitted is denoted TTI (transmission time interval). For example, the length of one sub-frame may be 1ms, and the length of one slot may be 0.5ms.

The structure of the radio frame is for exemplary purposes only, and thus the number of sub-frames included in the radio frame or the number of slots included in the sub-frame may change variously.

Meanwhile, one slot may include a plurality of OFDM symbols. The number of OFDM symbols included in one slot may vary depending on a cyclic prefix (CP).

One slot includes N_{RB} resource blocks (RBs) in the frequency domain. For example, in the LTE system, the number of resource blocks (RBs), i.e., N_{RB}, may be one from 6 to 110.

The resource block is a unit of resource allocation and includes a plurality of subcarriers in the frequency domain. For example, if one slot includes seven OFDM symbols in the time domain and the resource block includes 12 sub-carriers in the frequency domain, one resource block may include 7x12 resource elements (REs).

The physical channels in 3GPP LTE may be classified into data channels such as PDSCH (physical downlink shared channel) and PUSCH (physical uplink shared channel) and control channels such as PDCCH (physical downlink control channel), PCFICH (physical control format indicator channel), PHICH (physical hybrid-ARQ indicator channel) and PUCCH (physical uplink control channel).

The uplink channels include a PUSCH, a PUCCH, an SRS (Sounding Reference Signal), and a PRACH (physical random access channel).

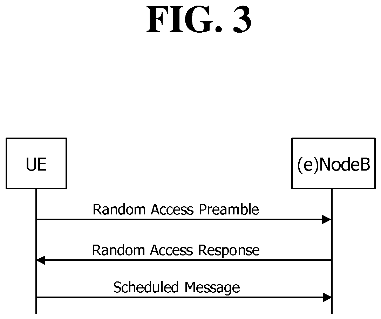

**FIG. 3** **is a flowchart illustrating a random access process in 3GPP LTE.**

The random access process is used for UE 10 to obtain UL synchronization with a base station, that is, an eNodeB 20, or to be assigned UL radio resources.

The UE 10 receives a root index and a physical random access channel (PRACH) configuration index from the eNodeB 20. 64 candidate random access preambles defined by a Zadoff-Chu (ZC) sequence are present in each cell. The root index is a logical index that is used for the UE to generate the 64 candidate random access preambles.

The transmission of a random access preamble is limited to specific time and frequency resources in each cell. The PRACH configuration index indicates a specific subframe on which a random access preamble can be transmitted and a preamble format.

The UE 10 sends a randomly selected random access preamble to the eNodeB 20. Here, the UE 10 selects one of the 64 candidate random access preambles. Furthermore, the UE selects a subframe corresponding to the PRACH configuration index. The UE 10 sends the selected random access preamble in the selected subframe.

The eNodeB 20 that has received the random access preamble sends a Random Access Response (RAR) to the UE 10. The random access response is detected in two steps. First, the UE 10 detects a PDCCH masked with a random access-RNTI (RA-RNTI). The UE 10 receives a random access response within a Medium Access Control (MAC) Protocol Data Unit (PDU) on a PDSCH that is indicated by the detected PDCCH.

### <Carrier Aggregation>

A carrier aggregation system is now described.

A carrier aggregation system aggregates a plurality of component carriers (CCs). A meaning of an existing cell is changed according to the above carrier aggregation. According to the carrier aggregation, a cell may signify a combination of a downlink component carrier and an uplink component carrier or an independent downlink component carrier.

Further, the cell in the carrier aggregation may be classified into a primary cell, a secondary cell, and a serving cell. The primary cell signifies a cell operated in a primary frequency. The primary cell signifies a cell which UE performs an initial connection establishment procedure or a connection reestablishment procedure or a cell indicated as a primary cell in a handover procedure. The secondary cell signifies a cell operating in a secondary frequency. Once the RRC connection is established, the secondary cell is used to provide an additional radio resource.

As described above, the carrier aggregation system may support a plurality of component carriers (CCs), that is, a plurality of serving cells unlike a single carrier system.

The carrier aggregation system may support a cross-carrier scheduling. The cross-carrier scheduling is a scheduling method capable of performing resource allocation of a PDSCH transmitted through other component carrier through a PDCCH transmitted through a specific component carrier and/or resource allocation of a PUSCH transmitted through other component carrier different from a component carrier basically linked with the specific component carrier.

### <IoT (Internet of Things) communication>

Hereinafter, the IoT will be described.

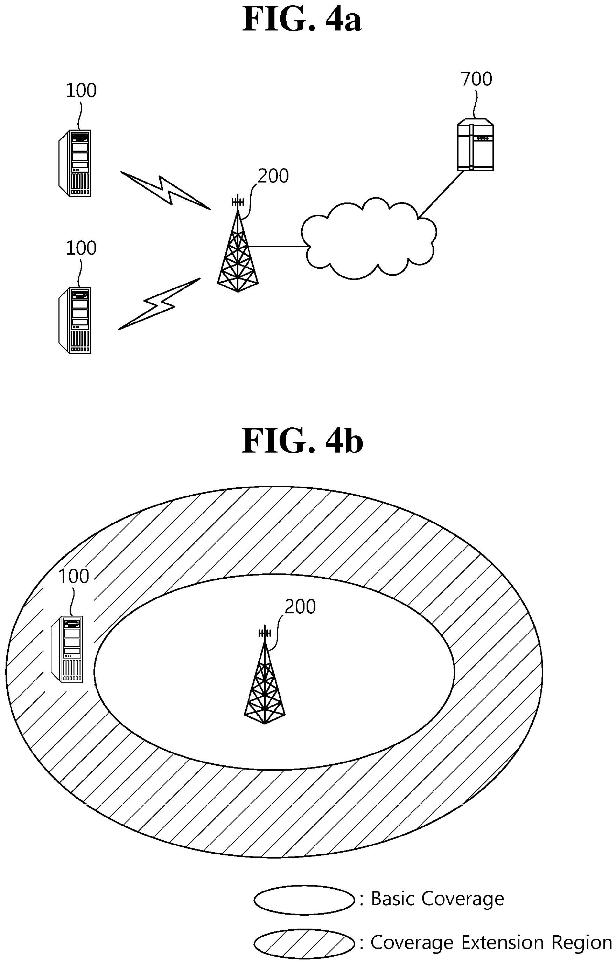

**FIG. 4A** **illustrates an example of IoT (Internet of Things) communication.**

The IoT refers to information exchange between the IoT devices 100 without human interaction through the base station 200 or information exchange between the IoT device 100 and the server 700 through the base station 200. In this way, the IoT communication may be also referred to as Cellular Internet of Things (CIoT) in that it communicates with a cellular base station.

Such IoT communication is a type of MTC (machine type communication). Therefore, the IoT device may be referred to as an MTC device.

The IoT service is distinct from the service in the conventional human intervention communication and may include various categories of services such as tracking, metering, payment, medical service, and remote control. For example, the IoT services may include meter reading, water level measurement, use of surveillance cameras, inventory reporting of vending machines, and so on.

Since the IoT communication has a small amount of data to be transmitted and uplink or downlink data transmission and reception rarely occur, it is desirable to lower the cost of the IoT device 100 and reduce battery consumption depending on a low data rate. Further, since the IoT device 100 has low mobility characteristics, the IoT device 100 has characteristics that the channel environment changes little.

**FIG. 4B** **is an illustration of cell coverage expansion or augmentation for an IoT device.**

Recently, expanding or augmenting the cell coverage of the base station for the IoT device 100 has been considered, and various techniques for expanding or increasing the cell coverage have been discussed.

However, when the coverage of the cell is expanded or increased, if the base station transmits a downlink channel to the IoT device located in the coverage extension (CE) or coverage enhancement (CE) region, then the IoT device has difficulty in receiving it. Similarly, when an IoT device located in the CE region transmits an uplink channel, the base station has difficulty in receiving it.

In order to solve this problem, a downlink channel or an uplink channel may be repeatedly transmitted over multiple subframes. Repeating the uplink/downlink channels on multiple subframes is referred to as bundle transmission.

Then, the IoT device or the base station can increase the decoding success rate by receiving a bundle of downlink/uplink channels on multiple subframes, and decoding a part or all of bundles.

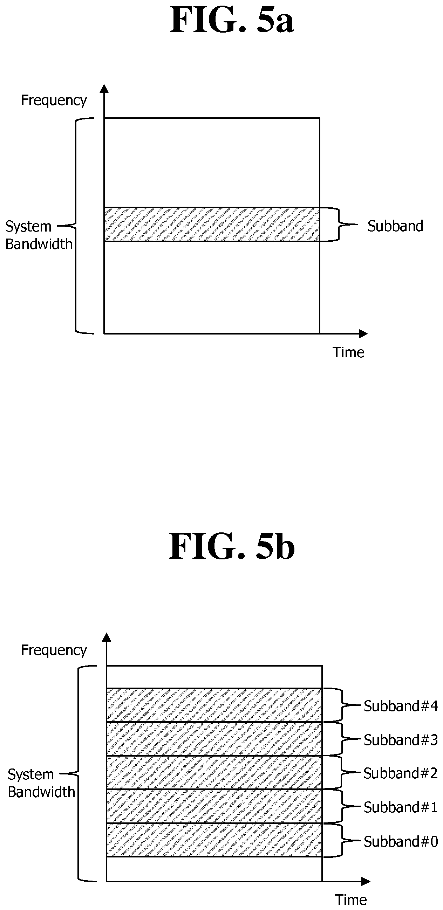

**FIG. 5A and 5B** **are diagrams illustrating examples of sub-bands in which IoT devices operate.**

As one method for low-cost IoT devices, regardless of the system bandwidth of the cell as shown in FIG. 5A, the IoT device may use a sub-band of about 1.4 MHz for example.

In this case, an area of the subband in which the IoT device operates may be positioned in a central region (e.g., six middle PRBs) of the system bandwidth of the cell as shown in FIG. 5A.

Alternatively, as shown in FIG. 5B, a plurality of sub-bands of the IoT device may be used in one sub-frame for intra-subframe multiplexing between IoT devices to use different sub-bands between IoT devices. In this case, the majority of IoT devices may use sub-bands other than the central region of the system band of the cell (e.g., six middle PRBs).

The IoT communication operating on such a reduced bandwidth can be called NB (Narrow Band) IoT communication or NB CIoT communication.

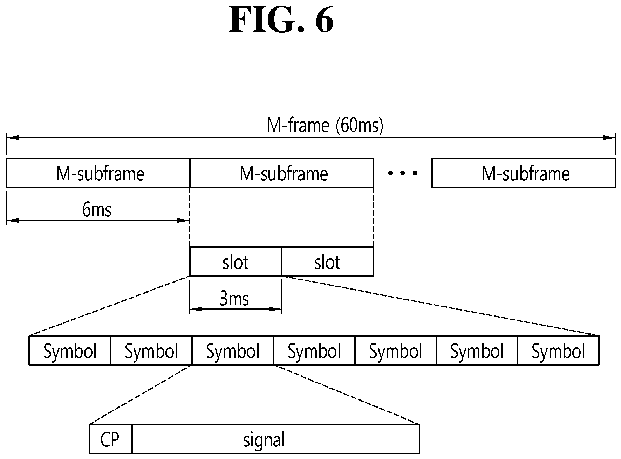

**FIG. 6** **illustrates an example of time resources that can be used for NB-IoT in M-frame units.**

Referring to FIG. 6, a frame that may be used for the NB-IoT may be referred to as an M-frame, and the length may be illustratively 60ms. Also, a subframe that may be used for the NB IoT may be referred to as an M-subframe, and the length may be illustratively 6ms. Thus, an M-frame may include 10 M-subframes.

Each M-subframe may include two slots, and each slot may be illustratively 3ms.

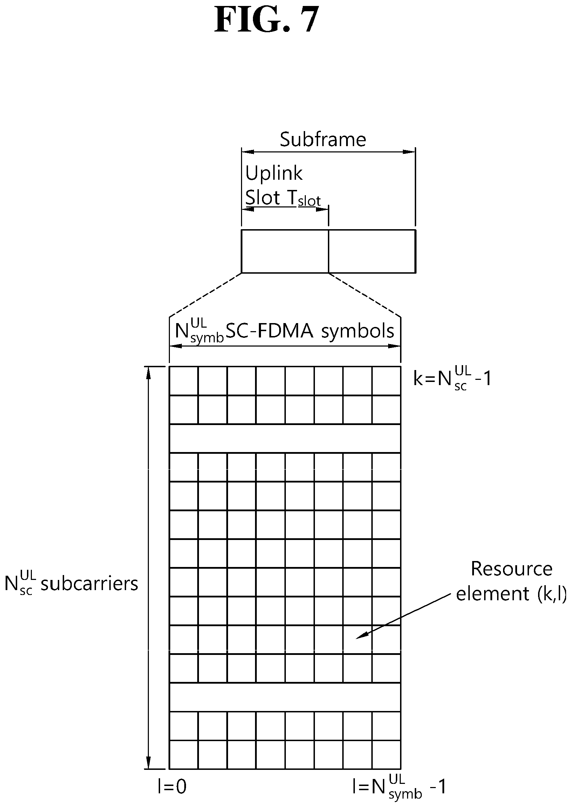

However, unlike what is shown in FIG. 6, a slot that may be used for the NB IoT may have a length of 2ms, and thus the subframe has a length of 4ms and the frame may have a length of 40ms. This will be described in more detail with reference to FIG. 7.

**FIG. 7** **is another illustration representing time resources and frequency resources that can be used for NB IoT.**

Referring to FIG. 7, a physical channel or a physical signal transmitted on a slot in an uplink of the NB-IoT includes *N*_{symb}^{UL} SC-FDMA symbols in a time domain, and includes *N*_{sc}^{UL} subcarriers in a frequency domain. The physical channels of the uplink may be divided into a Narrowband Physical Uplink Shared Channel (NPUSCH) and a Narrowband Physical Random Access Channel (NPRACH). In the NB-IoT, the physical signal may be Narrowband DeModulation Reference Signal (NDMRS).

The uplink bandwidth of the *N*_{sc}^{UL} subcarriers during the *T*ₛₗₒₜ slot in the NB-IoT is as follows.

**[Table 1]**

| Subcarrier spacing | *N*_{sc}^{UL} | *T*ₛₗₒₜ |
|---|---|---|
| Δf= 3.75kHz | 48 | 61440*Tₛ |
| Δf= 15kHz | 12 | 15360*Tₛ |

In the NB-IoT, each resource element (RE) of the resource grid has k = 0, *N*_{sc}^{UL}-1 indicating the time domain and frequency domain, when 1 is 1 = 0, *N*_{symb}^{UL}-1. it can be defined as an index pair (k, 1) in a slot.

In the NB-IoT, downlink physical channels include an NPDSCH (Narrowband Physical Downlink Shared Channel), an NPBCH (Narrowband Physical Broadcast Channel), and a NPDCCH (Narrowband Physical Downlink Control Channel). The downlink physical signal includes a narrowband reference signal (NRS), a narrowband synchronization signal (NSS), and a narrowband positioning reference signal (NPRS). The NSS includes a Narrowband primary synchronization signal (NPSS) and a Narrowband secondary synchronization signal (NSSS).

Meanwhile, the NB-IoT is a communication scheme for wireless devices that use reduced bandwidth (i.e., narrowband) with low-complexity/low-cost. This NB-IoT communication is aimed at allowing a number of wireless devices to be connected in the reduced bandwidth. Furthermore, NB-IoT the communication is aimed to support wider cell coverage than cell coverage in existing LTE communication.

Meanwhile, the carrier having the reduced bandwidth includes only one PRB when the subcarrier spacing is 15 kHz, as can be seen from Table 1 above. That is, the NB-IoT communication can be performed using only one PRB. Here, it is assumed by a wireless device that the NPSS/NSSS/NPBCH/SIB-NB is transmitted from the base station, and the PRB connected to receive it may be referred to as an anchor PRB (or an anchor carrier). Meanwhile, the wireless device can receive an additional PRB from the base station in addition to the anchor PRB (or anchor carrier). Here, among the additional PRBs, the PRB that the wireless device does not expect to receive NPSS/NSSS/NPBCH/SIB-NB from the base station may be referred to as a non-anchor PRB (or non-anchor carrier).

Meanwhile, in the existing NB-IoT communication, the wireless device performed an operation related to the paging signal on the anchor PRB (or the anchor carrier) (e.g., monitoring the NPDCCH including the scheduling information and receiving the NPDSCH including the paging signal). However, when a large number of wireless devices are connected to the anchor carrier, there was a problem that operations related to the paging signal are excessively concentrated on the anchor carrier.

On the other hand, in a conventional NB-IoT communication, the wireless device performed an operation related to a random access procedure on an anchor PRB (or an anchor carrier). However, when a large number of wireless devices are connected to the anchor carrier, the operations related to the random access procedure are excessively concentrated on the anchor carrier.

### <Disclosure of the present specification >

Hereinafter, the present specification describes an apparatus that operates on a reduced bandwidth according to low-complexity/low-capability/low-specification/low-cost as a LC device or a BL (bandwidth reduced) device or an NB-IoT device.

### I. First disclosure

The first disclosure of the present disclosure provides a method and system for preventing paging-related procedures from concentrating on a specific anchor PRB (or an anchor carrier) in a system (or radio access technology (RAT)) supporting Narrow Band Internet of Things (NB-IoT) .

More specifically, the first disclosure of the present application discloses a method of distributing the load on an anchor PRB (or an anchor carrier), by enabling the paging-related procedures in a non-anchor PRB to be performed in a system supporting the NB-IoT.

A brief introduction to the measures according to the first disclosure of this specification is as follows. For example, according to one embodiment, the NB-IoT device may select an anchor PRB (or an anchor carrier) based on its ID (or UE ID). According to this scheme, since the base station can determine the PRB to selectively transmit the paging signal to the NB-IoT device, there is an advantage that the load due to the paging signal can be reduced. According to another embodiment, the non-anchor PRB (or non-anchor carrier) may be used for the paging procedure. According to such scheme, the load on the anchor PRB (or anchor carrier) can be reduced. According to another embodiment, the base station can hop the PRB to transmit the paging signal. According to such a scheme, the base station can prevent an increase in the load caused by simultaneously transmitting the paging signal in the multiple PRBs. According to yet another alternative, other CSSs associated with a common search space (CSS) for the paging signal may be configured.

Although the following description will be described only for a system (or RAT) supporting NB-IoT for the purpose of convenience, it may be applicable to the case where a traffic associated with the paging signal is distributed in a system in which the PRB (or PRB group) for receiving synchronization signals (e.g., NPSS and NSSS) and SIB are separately defined as in the concept of an anchor PRB (or an anchor carrier).

### I-1. Method 1: Reset of anchor PRB (or anchor carrier) for paging load balancing

As one method to prevent the paging signal from concentrating on a particular anchor PRB (or an anchor carrier), there may be to reset the anchor PRB (or an anchor carrier). According to this method, the NB-IoT device first connect to base station through an anchor PRB (or an anchor carrier) (e.g., a first anchor PRB) and then may continue to stay in the corresponding anchor PRB (or an anchor carrier) (e.g., the first anchor PRB), and may set another PRB as a new anchor PRB (or an anchor carrier) (e.g., a second anchor PRB).

If the other PRB is reset to the new anchor PRB (or anchor carrier) (e.g., the second anchor PRB), then the NB-IoT device does not need to return to an initial anchor PRB (or anchor carrier) (e.g., the first anchor PRB) again, and may perform operations for performing on the existing NB-IoT anchor PRB (or an anchor carrier) in the same manner, such as operations associated with the NPSS/NSSS/NPBCH/SIB-NB, by camping on the NB-IoT anchor PRB (or the anchor carrier PRB) (e.g., the second anchor PRB).

To this end, the NB-IoT device should be able to obtain information on other PRBs (or other carriers) and to select a new anchor PRB (or an anchor carrier) (e.g., the second anchor PRB) from among the other PRBs. Specifically, the NB-IoT device may obtain information on an anchor type PRB (e.g., an anchor type PRB or an anchor type carrier or the like) through an initially connected anchor PRB (or an anchor type carrier) (e.g. the first anchor PRB). The anchor type PRB (or anchor type carrier) is a PRB on which a base station transmits a signal such as the NPSS/NSSS/NPBCH/SIB-NB and means PRBs capable of being an anchor PRB (or an anchor carrier). The information on the anchor type PRB may be included in the information received from the base station in the initial access process by the NB-IoT device such as the SIB-NB.

Based on the information on the anchor type PRB, the NB-IoT device can newly reset its own anchor PRB (or an anchor carrier). The NB-IoT device may select a new anchor PRB, using its own ID (e.g., UE ID). For example, the NB-IoT device may select a new anchor PRB (or an anchor carrier) through a function using the number of anchor type PRBs and its own ID (e.g., UE ID). In this case, the number of NB-IoT devices having a similar probability to each of the anchor type PRBs may be distributed, thereby preventing the concentration of the NB-IoT devices at a specific anchor PRB (or an anchor carrier). On the other hand, when the base station performs downlink (DL) transmission related to the paging signal, the base station can find out information on an anchor PRB (or an anchor carrier) selected by the NB-IoT device based on the ID (e.g., UE ID) of the NB- IoT device. In this case the paging signal is transmitted through the NPDSCH. The scheduling information for the NPDSCH including the paging signal is transferred through the NPDCCH on the CSS. Therefore, there is an advantage that the base station can send the paging signal only in the PRB in which the CSS for monitoring the NPDCCH exists. If the base station does not know information on in which PRB the NB-IoT device expects that the CSS for monitoring the NPDCCH associated with the paging signal is to exist, then the base station should transmit on all PRBs the paging signal for the corresponding NB-IoT device, thereby leading to excessive traffic.

The anchor type PRB may be determined among PRBs that meet the criteria of the channel raster. The base station can select the PRBs meeting a predetermined criterion among the PRBs meeting the criteria of the channel raster and select them as an anchor PRB (or an anchor carrier). Alternatively, it may not be used for the initial connection of the NB-IoT device because it does not meet the criteria of the channel raster, but it may be made to be a new anchor type PRB by transmitting information such as NPSS/NSSS/NPBCH/SIB-NB.

As described above, when the anchor PRB (or the anchor carrier) is reset, the PRB used in the subsequent NPRACH process may follow the reset anchor PRB (or the anchor carrier).

### I-2. Method 2: Instructions for the CSS to monitor the NPDCCH associated with the paging signal on the non-anchor PRB (or non-anchor carrier)

In the standard specification based on the existing 3GPP Release 13, the procedure associated with the paging signal is determined to be performed only by the anchor PRB (or the anchor carrier). In this section, proposed is a method to set additional PRB to the NB IoT device, for the procedure associated with the paging signal as one way to distribute the overload due to the paging signal from the anchor PRB (or anchor carrier). In this case, the setting of the additional PRB may be performed through an anchor PRB (or an anchor carrier), or may be performed on a non-anchor PRB (or a non-anchor PRB) in which the NB-IoT device does not expect information such as NPSS/NSSS/NPBCH/SIB-NB.

After the NB IoT device monitors NPDCCH on CSS, the PRB that expects the paging signal may be informed from the base station through a message such as the SIB-NB. The NB-IoT device is instructed on the information on the PRB for the paging signal through an anchor PRB (or an anchor carrier), and monitors the NPDCCH in the CSS on the corresponding PRB. The NB IoT device can monitor the CSS on the corresponding PRB, to receive the paging signal on the PRB according to one of the following three implementation options.

Option 1) Paging signal for devices operating on each of all anchor PRB (or anchor carrier) is sent through a single PRB.

Option 2) There may be a non-anchor PRB (or a non-anchor carrier) corresponding to each anchor PRB (or an anchor carrier), or a paging signal is directly transmitted from the corresponding anchor PRB (or an anchor carrier), and thus the PRB (an anchor carrier) that performs a paging signal is identified.

Option 3) A plurality of PRBs for paging signal on an anchor PRB (or an anchor carrier) are operated, and each NB-IoT device determines a PRB to receive a paging signal depending on its ID among the plurality of PRBs. In this case, the plurality of PRBs for the paging signal may be shared between the anchor PRBs (or anchor carrier), or may be independently retained each other.

The Option 1 is a method of performing by concentrating the procedure associated with the paging signal into one PRB. In this case, one PRB may be determined as one of a plurality of anchor PRBs (or anchor carriers), and may be a separately defined non-anchor PRB (or non-anchor carrier) for paging signal purposes. The Option 2 is an embodiment in which there is at least one anchor PRB (or an anchor carrier), and PRBs for processing a paging signal for each anchor PRB (or anchor carrier) are set differently. To this end, the base station may further determine a PRB for a paging signal for each anchor PRB (or an anchor carrier). In this case, the additional determined PRB may be an anchor PRB (or an anchor carrier) or a non-anchor PRB (or a non-anchor carrier). Also, corresponding to two or more anchor PRBs, one additional PRB for the paging signal may be shared and used together. The Option 3 is an embodiment of operating two or more PRBs for the paging signal based on the ID (e.g., UE ID) of the NB-IoT device. In this case, the plurality of PRBs may be shared by each anchor PRB (or anchor carrier), or may be independently determined for each anchor PRB (or anchor carrier). Also, the PRB used for the paging signal may be an anchor PRB (or an anchor carrier) or a non-anchor PRB (or a non-anchor carrier).

On the other hand, In order to reduce signalling operation of the NB IoT device between anchor PRB (or anchor carrier) and non-anchor PRB (or non-anchor carrier) to receive a synchronization signal (e.g., NSS), the base station may allow some signals/messages associated with the NPSS/NSSS/NPBCH/SIB-NB to be transmitted on the non-anchor PRB (or non-anchor carrier). For example, if the NB-IoT device has been stayed in DRX mode for a long time and then wakes up, instead of returning to the anchor PRB again to receive the synchronization signal (e.g. NSS) and receiving all the NPSS/NSSS/NPBCH/SIB-NB, only the minimized signal information may be received on the corresponding PRB, and time synchronization may be tuned through the minimized signal information.

When a non-anchor PRB (or non-anchor carrier) is used for a paging signal, the PRB on which the subsequent NPRACH operation is performed may be to use the same PRB as the PRB on which the paging signal is performed.

### I-3. Method 3: Hopping of PRB for paging signal

In accordance with a standard based on the existing 3GPP Release 13, when a base station is operating multiple anchor PRBs (or anchor carriers), if the NB-IoT device in idle state receives does not select an anchor PRB (or an anchor carrier) by a specific rule, then the base station should transmit the paging signal in all PRBs to transmit the paging signal information. This may be a waste of limited resources from the point of view of the base station. In order to prevent this, the base station proposes a method of hopping the PRB that transmits the paging signal over time. The base station may determine one PRB which transmits the paging signal at specific transmission timing depending on a specific rule, and may not transmit information associated with the paging signal in the remaining PRBs. In this case, if the NB-IoT device can know the rule for determining the PRB used for the paging signal, then the NB-IoT device may select the PRB corresponding to the rule and then may monitor the NPDCCH on the CSS for receiving the paging signal. For example, if there are N usable PRBs for the paging signal, then the base station may select N PRBs sequentially as PRBs for the paging signal. For this operation, the NB-IoT device can receive the information on the PRB to which the paging signal is to be transmitted from the base station through the downlink channel such as the SIB-NB, and thus the NB-IoT device can know in advance. In addition, information for determining the timing such as SFN can be utilized to determine the rule of the time axis regarding the hopping of the PRB. The base station and the NB-IoT device determine the PRB associated with the paging signal at the corresponding timing, by using the correlation between the index or the number of the PRB and the timing information such as the SFN based on the information, and may monitor the NPDCCH on the CSS for receipt of the paging signal on the corresponding PRB.

Detailed operation of the NB-IoT device according to the present invention can be distinguished by the following implementation options according to the manner of determining the PRB.

Option 1) Allows PRB used for paging signal to be anchor PRB

Option 2) Allows the PRB used for the paging signal to be possible even for non-anchor PRBs

Since, in case of the option 1, the PRB on which the paging signal is transmitted is to be restricted to the anchor PRB (or the anchor carrier), the operation to be performed may be one of the following two, for receiving information, such as the NPSS/NSSS/NPBCH/SIB-NB, prior to monitoring the paging signal by the NB-IoT device. (1) NB-IoT device can obtain information such as the NPSS/NSSS/NPBCH/SIB-NB through their anchor PRB (or the anchor carrier). (2) The NB-IoT device can acquire information such as the NPSS/NSSS/NPBCH/SIB-NB through the PRB that monitors the paging signal. On the other hand, in case of Option 2, since there is no guarantee that information such as NPSS/NSSS/NPBCH/SIB-NB is transmitted in the PRB to which the paging signal is transmitted, the NB-IoT device can acquire information such as NPSS/NSSS/NPBCH/SIB-NB only through its own anchor PRB (or anchor carrier). If, in the Option 2, the NB-IoT device is to acquire information of NPSS/NSSS/NPBCH/SIB-NB through another anchor type PRB, then the base station should inform the NB-IoT device of information on all anchor type PRBs.

When the PRB for the paging signal purposes is hopped, the PRB in which the NB-IoT device performs the NPRACH operation may use the same PRB as the PRB on which the paging signal is performed. Alternatively, an anchor PRB (or an anchor carrier) to which was initially connected on its own may be used as a PRB for NPRACH.

### I-4. Method 4: CSS settings

When a PRB associated with a paging signal is determined to be other than an anchor PRB (or an anchor carrier) connected to the NB-IoT device, a CSS for monitoring a PDCCH including scheduling information of the paging signal may be also determined to be present in the PRB on which the paging signal is received. If the CSS for monitoring the PDCCH including the scheduling information of the paging signal is operated in a PRB other than the anchor PRB (or the anchor carrier), then the manner in which the target CSS other than the paging signal is operated can also be changed. For example, an operation of the SIB change notification may be determined by the operation of the paging signal PRB.

The operation method of the SIB change notification can be determined by the DRX setting.

If the DRX setting is the same between the paging signal and the SIB change notification (e.g., if the DRX settings associated with the paging signal and the DRX settings associated with the SIB change notification are the same), then the SIB change notification may be sent in the same PRB as the paging signal PRB. In this case, there is an advantage that it is preferred in terms of resource efficiency since the CSS in which the NPDCCH including the scheduling information for the SIB change notification is to be present is not separately operated. Conversely, the DRX settings are the same to each other (e.g., the DRX settings associated with the paging signal and the DRX settings associated with the SIB change notification are the same), but there may be cases where the PRB of the paging signal and the SIB change notification are different from each other. For example, the paging signal is set to be transmitted on a different PRB than the anchor PRB, but the SIB change notification can be set to be sent over an anchor PRB (or an anchor carrier). Alternatively, the PRB associated with the paging signal and the PRB for SIB change notification may be set differently, respectively. In this case, the NB-IoT device can perform a monitoring operation by selecting any one CSS, among the CSS in which the NPDCCH exists, including the scheduling information of the paging signal, and the CSS in which the NPDCCH exists, which includes the scheduling information of the SIB change notification. However, if the NB-IoT device arbitrarily selects any one of the two CSSs, then the reception of the other one may be missed, and thus, a time interval can be divided into the time interval during which the NB-IoT device detects the NPDCCH on the CSS associated with the paging signal in the DRX on interval, and the SIB change notification and the time interval for detecting the NPDCCH on the CSS associated with SIB change notification.

On the other hand, there are cases where the SIB change notification and the DRX setting for the paging signal are different. In this case, there may a case where the DRX cycle associated with the SIB change notification and the DRX cycle required for the paging signal is different. For example, in a system with little change in SIB, the NB-IoT device may not always need to operate in the same DRX to attempt to receive SIB change notifications. In this case, the PRB to which the SIB change notification is transferred may be the same as or different from the PRB to which the paging signal transferred. In other cases, it can be determined differently depending on the degree of load of each PRB. As an example, if the distribution of the load of the anchor PRB (or the anchor carrier) is an important objective, then in a system in which the PRB for the paging signal is separately determined, the SIB change notification can be transferred in the same PRB as the paging signal. Or if it is an important objective to minimize the load of the PRB for the paging signal, then the NB IoT device may attempt to receive an SIB change notification on the anchor PRB (or an anchor carrier).

When different DRX settings are to be determined and used, there may occur a period in which the SIB change notification and the DRX timing for the paging signal conflict with each other. In this case, the NB-IoT device can determine the priority information and monitor the CSS on the corresponding PRB. For example, assuming that there is little change in the SIB in the system, the NB-IoT device may monitor the CSS on the PRB associated with the paging signal, since the probability that a paging signal will be received is higher than the probability that a SIB change notification will be received. As another example, if the DRX of the SIB change notification is longer than the DRX of the paging signal, then it is possible to delay the CSS associated with the paging signal to be monitored in the next order of DRX timing, thereby setting both information to be all received in a shorter time. The criterion for which the NB-IoT device selects may be assumed to be the information known to both the NB-IoT device and the base station. In this case, the base station can prevent unnecessary repetition of the same information. In this case, if the NB-IoT device can not perform monitoring on the CSS associated with the SIB change notification due to the CSS monitoring associated with the paging signal, then the NB-IoT device performs monitoring on CSS associated with SIB change notification, or receives SIB1 and directly check whether SIB is changed prior to the next DRX on interval or switching to connection mode.

The CSS setting scheme described so far can be used in combination with the above-described method of determining the PRB associated with the paging signal. Specifically, the above-mentioned methods may be used independently of each other, but two or more methods may be used in combination with each other. For example, a first scheme for resetting an anchor PRB (or an anchor carrier) may be used in combination with a third scheme associated with PRB hopping. The NB-IoT device may determine an anchor PRB (or an anchor carrier) which is reset from the initial anchor PRB (or an anchor carrier), and then attempt to receive the paging signal on the PRB determined depending on the PRB hopping pattern.

### I-5. Method 5: Non-uniform PRB allocation

The criteria for allocating the PRB for the paging signal to the UE may be determined to be uniformly distributed to all PRBs, but the number of NB-IoT devices monitoring each PRB may be non-uniform. For example, in the case of an NB-IoT device according to the standard of the existing 3GPP Release 13, a signal associated with the paging signal is set to be monitored only from an anchor PRB (or an anchor carrier), but the IoT device which is made improvements in accordance with the proposals herein may perform monitoring on a non-anchor PRB (or non-anchor carrier). In this situation, if the operation associated with the paging signal is distributed to all possible PRBs, then may be different from the number of NB-IoT devices according to the standard of the existing 3GPP Release 13 connected to one base station and the number of NB-IoT devices to be processed in an anchor PRB (or an anchor carrier) and a non-anchor PRB (or non-anchor carrier) depending on the number of improved NB-IoT devices in accordance with the suggestions herein. In this case, the efficiency of PRB resources may be reduced due to the number of different NB-IoT devices. In particular, there may be a problem occurred that the NB-IoT device monitoring the paging signal is concentrated in a specific PRB.

In the method proposed in this proposal, the base station can make the distribution of NB-IoT devices uniform or unequal on the PRBs to transmit the paging signal. The criteria for assigning NB-IoT devices to each PRB can be expressed as a weight-based function. In this case, the value of the weight can be set to any integer.

First, according to the method of uniformly distributing PRBs, a list of PRBs that list selectable PRBs can be generated when considering that two or more PRBs can be selected for paging signal purposes. It is possible to determine the sequence number of the PRBs on the list and to determine the PRB index of the sequence number suitable for the specific NB-IoT device depending on a specific condition such as the ID (e.g., UE ID) of the NB-IoT device. This concept can be extended to apply the method of non-uniform distribution selection of PRBs.

Next, the criterion that the NB-IoT device selects the paging signal PRB may be determined to follow a non-uniform distribution rule. According to the method of unevenly distributing the PRBs, it is possible to unequally select the PRBs using the weights. The weight value of a specific PRB may be defined as the number of times the corresponding PRB to be appeared in the list. For example, when one anchor PRB (or an anchor carrier) and one non-anchor PRB (or a non-anchor carrier) are used for the paging signal, the weight of w₁ may be applied to the anchor PRB (or anchor carrier), and the weight of w₂ may be applied to the non-anchor PRB (or non-anchor carrier). In this case, assuming that w1 = 1 and w2 = 2, the PRB list used by the NB-IoT device and the base station may be as shown in the following example.

### [Example 1]

### {PRBₐ, PRBₙ, PRBₙ}

In the above example, PRBₐ and PRBₙ represent anchor PRB (or anchor carrier) and non-anchor PRB (or non-anchor carrier), respectively. The NB-IoT device and the base station can determine the PRB index for the paging signal in the corresponding PRB list. The non-anchor PRB (or non-anchor carrier) is more likely to be selected as the paging signal PRB because the number of non-anchor PRBs to be appeared is higher in the above PRB list.

Meanwhile, in order to increase the divergence of the PRB selection in the list, the order in which the order is determined in the PRB list may be shuffled. For example, if the same PRBs exist consecutively in the list, then the effect of PRB hopping can not be obtained. Therefore, when generating the PRB list, it may be effective to configure the PRBs so that the same PRBs are not consecutive. For example, assuming that one anchor PRB with the w1 weight in the list and n non-anchor PRBs with the w2 weight are included, and assuming w1 = 2, w2 = 3, and n = 2, the list may be shown as follows:

### [Example 2]

### {PRBₐ, PRBₙ₁, PRBₙ₂, PRBₙ₁, PRBₙ₂}

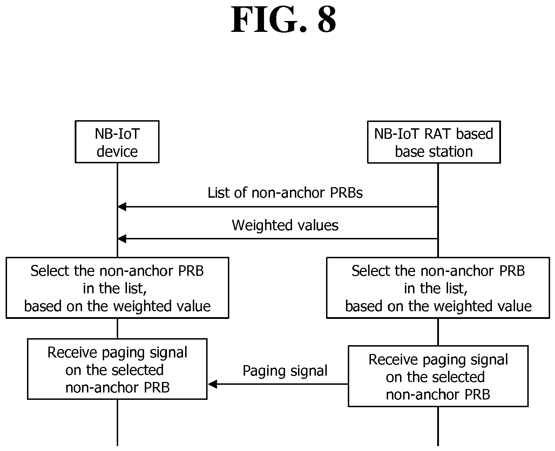

**FIG. 8** **is a flowchart illustrating an example of non-uniformly selecting PRBs according to one embodiment of a first disclosure.**

As can be seen with reference to FIG. 8, the base station using the NB IoT RAT transmits the list of non-anchor PRBs to the NB IoT device.

Then, the base station also transmits information on the weight values to the NB IoT device.

Then, the base station and the NB IoT device then select a non-anchor PRB in the list based on the weight value. The ID of the NB IoT device (i.e. UE ID) may be used in the selection.

The base station transmits the paging signal on the selected non-anchor PRB. The NB IoT device receives the paging signal on the selected non-anchor PRB.

The weight values may be received in a list form as shown in Example 3 below.

### [Example 3]

### {w1, w2, w3, w4, w5, w6, w7, w8,w9, w10, w11, w12, w13, w14, w15, w16}

The weight values in the list may be arranged in the order of the PRBs. For example, the weight value for the i-th PRB may be positioned at the i-th position in the list.

The NB-IoT device can select PRBs having the smallest index among the PRBs having a weight greater than the value calculated by using the sum of the weight values in the list and the UE ID.

The above can also be applied to PRB groups in which specific PRBs are bundled. That is, the NB-IoT device and the base station may perform selection with a PRB group unit based on the weight. As an example, a group can be generated based on whether an anchor PRB/non-anchor PRB (or non-anchor carrier), and a weight can be given to each group. Alternatively, a plurality of groups may be defined even in the same non-anchor PRB (or non-anchor carrier) and thus n non-anchor PRB groups may be set.

The proposed method in this section can be used in combination with the first to third methods described above. As an example, the anchor PRB (or anchor carrier) to be reset in the first scheme may be selected as a weighted selection scheme in this section. Also, according to the second scheme, it is possible to determine, based on the weights of this section, which PRB to select in a situation where one or more anchor PRB (or anchor carrier) and a non-anchor PRB (or non-anchor carrier) exist. Also, in the PRB selection process for hopping by the NB-IoT device according to the third scheme, the weights of this section may be used so that the probability of selecting each PRB follows a non-uniform distribution.

The weight value proposed in this section to the NB-IoT device may be transferred to the base station through information such as RRC signal or DCI. In this case, if the weight value is arranged in a table in advance, then the base station may signal an index value indicating the specific weight in the table to the NB-IoT device. Or if the weight value is defined in advance, then the base station may transmit an indication to the NB-IoT device to turn on/off whether the weight value is applied. In addition, the value of the weight is not specified for every PRB (or PRB group), but can be determined as a ratio of weights between PRBs (or PRB groups). For example, a value of a weight used for generating a PRB list may be determined through a ratio of a weight of a non-anchor PRB (or a non-anchor carrier) with reference of an anchor PRB (or an anchor carrier).

### II. Second disclosure

The second disclosure of the present disclosure provides methods for distributing operations associated with PRACH to a non-anchor PRB (or non-anchor carrier) in a system (or RAT) supporting NB-IoT.

Although the following description is limited to the NB-IoT technology for the sake of convenience, if there is a purpose for distributing the traffic associated with the random access procedure, then the following description may be applicable to the case, even for a system in which a PRB for receiving a synchronous signal (e.g., NSS) and system information are separately defined as in the concept of an anchor PRB (or an anchor carrier).

### 11-1. First method: Setting up downlink PRB for NPRACH

According to a first method, the NB-IoT device may select the NPRACH resource based on its own ID (e.g. UE ID) to prevent traffic associated with the NPRACH from concentrating on the specific PRB. According to the existing 3GPP Release 13 standard, an NPRACH-related operation is performed using an anchor PRB (or an anchor carrier) connected by an NB-IoT device. However, when NB-IoT devices are concentrated in a specific anchor PRB (or an anchor carrier), the probability of collision may increase because a number of NB-IoT devices attempt to connect simultaneously due to the nature of NB-IoT performing contention-based random access.

Accordingly, in the first method, the NB-IoT device proposes a method of selecting an NPRACH resource based on its own ID (e.g. UE ID).

### II-1-1. Reset anchor PRB (or anchor carrier)

Anchor PRB (or anchor carrier) can be reset as a method to prevent the load of NPRAHC from concentrating on a particular anchor PRB (or anchor carrier). Accordingly, the NB-IoT device initially connected to the base station thorough the anchor PRB (or an anchor carrier) may be stayed in the corresponding anchor PRB (or an anchor carrier), or may reset another PRB to a new anchor PRB (or an anchor carrier).

In order to reset the anchor PRB (or anchor carrier), the NB-IoT device can acquire information on the position and number of the anchor type PRB (i.e., the PRB that can be operated as an anchor) from the system information from the base station. In this case, the anchor type PRB refers to a PRB to which a base station can transmit the NPSS/NSSS/NPBCH/SIB-NB. Information on the anchor type PRB can be obtained through an initial access process in an anchor PRB (or an anchor carrier) by an NB-IoT device such as the SIB-NB. The base station and the NB-IoT device can perform the resetting of the anchor PRB (or anchor carrier) based on the information of the anchor type PRB and the ID (i.e., UE ID) of the NB-IoT device. The selection of the anchor PRB to be reset can be performed by a function relationship between the anchor type PRB and the ID of the NB-IoT device. Accordingly, the NB-IoT devices camping on the anchor PRB (or the anchor carrier) can be evenly distributed stochastically. The NB-IoT device having reset the anchor PRB (or anchor carrier) can continue camping on the reset anchor PRB (or anchor carrier) until the anchor type PRB information is changed. If information on an anchor type PRB is received through the SIB-NB, then it may be allowed that the NB-IoT device does not reset the anchor PRB (or anchor carrier) until it receives a notification that the SIB information has changed, such as an SIB change notification.

### II-1-2. Perform random access procedure on non-anchor PRB (or non-anchor carrier)

As a method of reducing the load of an anchor PRB (or an anchor carrier) due to NPRACH, it may be allowed to perform NPRACH-related operations (i.e., random access procedures) on the non-anchor PRB (or non-anchor carrier). In order for an NB-IoT device to perform an NPRACH operation on a non-anchor PRB (or non-anchor carrier), the following two options may be considered.

Option 1-1) The NB-IoT device camps on the non-anchor PRB (or non-anchor carrier) to monitor downlink signals other than the NPSS/NSSS/NPBCH/SIB-NB

Option 1-2) The NB-IoT device performs NPRACH-related operations only on non-anchor PRB (or non-anchor carrier).

According to the above option 1-1, after an NB-IoT device initially connect to the anchor PRB (or an anchor carrier), the operation which is camped on the non-anchor PRB (or a non-anchor carrier) is considered for operations other than the NPSS/NSSS/NPBCH/SIB-NB. To this end, the NB-IoT device should receive information on the non-anchor PRB (or non-anchor carrier) through the anchor PRB (or anchor carrier). The base station may transfer information on the non-anchor PRB (or non-anchor carrier) to the NB-IoT device through the SIB-NB. The base station may determine traffic condition of the anchor PRB (or the anchor carrier) and whether additional PRBs are available, and may determine which PRBs the NB-IoT device should select for NPRACH operation. In this case, the NB-IoT device may be stayed in the anchor PRB (or an anchor carrier), the non-anchor PRB (or a non-anchor carrier) or may be allocated. After receiving the corresponding information, the NB-IoT device performs operations such as NPDCCH monitoring on the CSS and/or NPRACH RAR window monitoring on the non-anchor PRB (or non-anchor carrier). When using the above option 1-1, more traffic can be relieved from the anchor PRB (or an anchor carrier) than the option 1-2.

According to the above option 1-2, the NB-IoT device performs only NPRACH-related operations on the non-anchor PRB (or non-anchor carrier). In the corresponding method, NPDCCH monitoring on the CSS associated with the paging signal, SIB change notification, SC-PtM, etc. is still be performed by the anchor PRB (or anchor carrier). That is, only NPRACH-related operations are performed in the non-anchor PRB (or non-anchor carrier). To this end, the NB-IoT device should receive information on the non-anchor PRB (or non-anchor carrier) through the anchor PRB (or anchor carrier). The base station can inform the NB-IoT device of the non-anchor PRB (or non-anchor carrier) through the SIB-NB. In case of the NB-IoT device receiving the paging signal, the information on the PRB for performing the operation associated with the NPRACH may be set through the paging signal. The base station may determine the traffic situation of the anchor PRB (or an anchor carrier) and whether additional PRBs are available, and may determine which PRBs the NB-IoT device should select for NPRACH operation. In this case, the NB-IoT device may be stayed in the anchor PRB (or an anchor carrier), or the non-anchor PRB (or a non-anchor carrier) may be allocated. After receiving the information, the NB-IoT device performs an operation such as NPRACH RAR window monitoring etc. on the allocated non-anchor PRB (or non-anchor carrier). When using Option 1-2, the NB-IoT device, the frequency in operation of skipping the PRB may be smaller than that of Option 1-1, by arranging the PRB for monitoring the NPDCCH on the CSS associated with the paging signal, the SIB change notification, the SC-PtM etc., and the PRB for observing the NPSS/NSSS/NPBCH/SIB-NB.

If an NPRACH related operation is available on the non-anchor PRB, then the NB-IoT device may be configured to select one PRB of the anchor PRB (or an anchor carrier) and one or more configurable non-anchor PRBs (or the non-anchor carrier), may perform the NPRACH operation. The NB-IoT device may select the PRB for NPRACH according to one of the following options.

Option 2-1) PRB setting based on ID (i.e., UE ID) of NB-IoT device

Option 2-2) PRB setting based on coverage enhancement (CE) level

Option 2-3) Transmission of PRB setting information through paging signal

In case of the Option 2-1, the NB-IoT device can set the PRB for NPRACH using its own ID. In this case, the number of NB-IoT devices allocated to the PRBs usable for NPRACH purposes may be uniformly distributed stochastically. In case of the option 2-2), the NB-IoT device can set the PRB for the NPRACH depending on its CE level (or the repetition level). According to this option, the base station can support different CE levels (or repetition levels) for each PRB. For this option, the base station can inform the NB-IoT device through the anchor PRB (or anchor carrier) of information on the CE level (or repetition level) supported by each PRB available for NPRACH purposes. The corresponding information can be transmitted through the SIB-NB. Each NB-IoT device can determine its required CE level (or repeat level) depending on RSRP (Reference Signals Received Power). If the NB-IoT device determines its own CE level (or repetition level), then it determines the index of the PRB to which it will perform NPRACH based on the information on the PRBs with the NPRACH purposes received through the anchor PRB (or anchor carrier). In this case, each NB-IoT device can variably set the degree of repetition level that meets its requirements, thereby reducing the waste of resources and the probability of transmission failure. In case of Option 2-3, it may be applied to the NB-IoT device which is in idle state that has received a paging signal. In case of Option 2-3, the base station may set to the NB-IoT device information on the PRB for performing the NPRACH by the NB-IoT device through the paging signal. In this case, there is an advantage that it may be allowed to determine a flexible PRB in comparison with the manner in which the PRB of NPRACH is set through the SIB-NB.

### II-2. Second Method: Setting of uplink PRB for NPRACH

### II-2-1. Uplink PRB setting

As a method for lowering the uplink collision probability of the NPRACH, the uplink resource can be determined based on the ID (i.e., UE ID) of the NB-IoT device. According to the standard of the existing 3GPP Release 13, it is defined that the uplink grant for the idle NB-IoT device is transmitted from the corresponding anchor PRB (or anchor carrier). Therefore, when NB-IoT devices are concentrated in a specific anchor PRB (or an anchor carrier), the probability of collision between NB-IoT devices increases in the random access preamble transmission process.

According to the method proposed by the present invention, the number of uplink PRBs corresponding to one downlink PRB may be equal to or greater than one. The NB-IoT device determines a PRB for NPRACH preamble transmission among a plurality of uplink PRBs. The NB-IoT device can obtain information on the position and the number of usable uplink PRBs from the system information. The base station may inform the NB-IoT device of the information through the SIB-NB transmitted through an anchor PRB (or an anchor carrier). Based on the acquired information, the NB-IoT device can select PRBs to use for the uplink transmission associated with the NPRACH procedure, using one of the following options.

Option 3-1) NB-IoT device ID (i.e. UE ID) based uplink PRB setting

Option 3-2) CE level based uplink PRB setting

When the option 3-2 is used, the NB-IoT device can select the uplink PRB to be used for the NPRACH preamble transmission based on the available uplink PRB information and its own ID. If this method is used, then equal number of NB-IoT devices stochastically may be distributed to each uplink PRB. According to the option 3-2, the NB-IoT device can determine an uplink PRB to be used for NPRACH preamble transmission in accordance with its CE level (or repetition level). According to this option 3-2, the base station can support different CE levels (or repetition levels) for each PRB. To this end, the base station can inform the NB-IoT device through the anchor PRB (or anchor carrier) of information on the CE level (or repetition level) supported by each PRB available for NPRACH purposes. The corresponding information may be transmitted through the SIB-NB. Each NB-IoT device can determine its required CE level (or repeat level) based on RSRP. If a plurality of downlink PRBs and a plurality of uplink PRBs can be selected in various combinations, then the option 3-1 and the option 3-2 may be used in combination with the options 2-1 and 2-2 described above, respectively. For example, if the downlink PRB is determined according to the option 2-1, then the uplink PRB can be determined using the option 3-1. Or if the downlink PRB is determined using option 2-2, the uplink PRB may be determined using option 3-2.

As described in this section, if a plurality of uplink PRBs correspond to one downlink PRB to perform an NPRACH operation, then information on the uplink PRB used by the NB-IoT device that has succeeded in uplink competition may be included in a random access response (RAR). The information makes it possible to classify each uplink PRB without restricting the number of patterns of preambles used for each uplink PRB resource.

Also, if one downlink PRB corresponds to a plurality of downlink PRBs to perform the NPRACH operation, then the base station can select a downlink PRB which expects an RAR through a preamble pattern transmitted by the NB-IoT device. For example, if a preamble pattern usable for each uplink PRB is classified, then the base station can distinguish the downlink PRB on which the NB-IoT device expects the RAR through the classification of the preamble pattern sent from the NB-IoT device. The method of selecting the random access preamble PRB for each NB-IoT device can be determined according to the criteria for selecting the downlink PRB by the NB-IoT device. For example, when one of the option 2-1 and the option 2-2 is selected to select the downlink PRB, the NB-IoT device may determine its own preamble pattern using each selection criterion. Or using information thorough an anchor PRB (or an anchor carrier), it may be allowed to specify a preamble pattern to be sent to which the NB-IoT device expects a specific downlink PRB.

If a plurality of uplink PRBs are used for random access in the NB-IoT, then the uplink timing reference of the NB-IoT device may be one of the following methods.
1) The transmission timing of the random access preamble in the non-anchor PRB (or non-anchor carrier) can be determined on based on the downlink reception timing (downlink subframe reception timing) of the anchor PRB (or anchor carrier).
2) The PRB (e.g., anchor PRB (or anchor carrier) or the PRB connected to a PRB on which the random access preamble is transmitted) which is a reference for transmission timing of the random access preamble on the non-anchor preamble (or the non-anchor carrier), may be informed to the NB-IoT device through the RRC signaling (or the SIB or NB-IoT devices dedicated RRC signaling), or may be informed to the NB-IoT device through the PDCCH command.

According to the foregoing description, the NB-IoT device (or the LC device or the BL device) can efficiently perform the random access procedure and can also receive the paging signal.

The embodiments of the present invention described so far can be implemented by various means. For example, embodiments of the present invention may be implemented by hardware, firmware, software, or a combination thereof. More specifically, the description will be made with reference to the drawings.

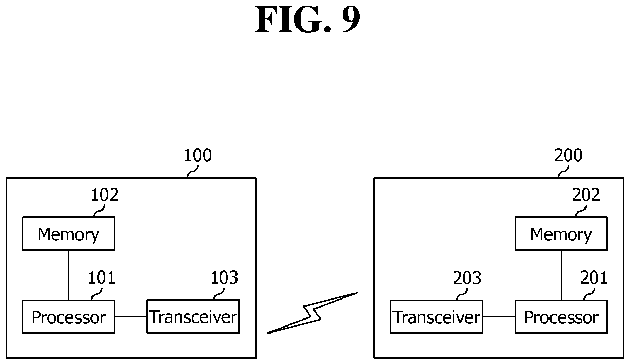

**FIG. 9** **is a block diagram illustrating a wireless communication system in which the present disclosure is implemented.**

The base station 200 includes a processor 201, a memory 202 and a transceiver (or radio frequency (RF) unit) 203. The memory 202 is coupled to the processor 201 and stores various information for operating the processor 201. The transceiver (or radio frequency (RF) unit) 203 is coupled to the processor 201 to transmit and/or receive a radio signal. Processor 201 implements the proposed functionality, process and/or method. In the above-described embodiment, the operation of the base station can be implemented by the processor 201.

A wireless device (e.g., an NB-IOT device) 100 includes a processor 101, a memory 102, and a transceiver (or RF unit) 103. The memory 102 is coupled to the processor 101 and stores various information for operating the processor 101. The transceiver (or radio frequency (RF) unit) 203 is coupled to the processor 101 to transmit and/or receive a radio signal. The processor 101 implements the proposed functions, procedures and/or methods.

The processor may comprise an application-specific integrated circuit (ASIC), other chipset, logic circuitry and/or data processing device. The memory may include read-only memory (ROM), random access memory (RAM) and random access memory (RAM), flash memory, memory cards, storage media, and/or other storage devices. The RF unit may include a baseband circuit for processing the radio signal. When the embodiment is implemented in software, the above-described techniques may be implemented with modules (processes, functions, and so on) that perform the functions described above. The module is stored in memory and can be executed by the processor. The memory may be internal or external to the processor and may be coupled to the processor by any of a variety of well known means.

In the exemplary system described above, although the methods are described on the basis of a flowchart as a series of steps or blocks, the present invention is not limited to the order of the steps, and some steps may occur in different orders or be simultaneously occurred with other step. It will also be understood by those skilled in the art that the steps shown in the flowchart are not exclusive and that other steps may be included or that one or more steps in the flowchart may be deleted without affecting the scope of the invention.

## Claims

1. A method for receiving a paging signal, the method performed by a wireless device supporting a narrowband-internet of things (NB-IoT) radio access technology (RAT) and comprising:
receiving weight values for uneven paging distribution;
selecting one in a list of carriers, each of which includes a non-anchor physical resource block (PRB), according to the weight values; and
receiving the paging signal via the selected non-anchor PRB,
wherein the non-anchor PRB allows the wireless device to assume that at least one or more predetermined signals are to be not transmitted, but the paging signal is to be transmitted.

2. The method of claim 1, wherein in the selection step, an identifier of the wireless device is used.

3. The method of claim 1, wherein in the selection step, timing information is further considered,
wherein the timing information includes a system frame number (SFN).

4. The method of claim 1, further comprising:
receiving the list of carriers.

5. The method of claim 1, wherein the weight values are received in form of a list.

6. The method of claim 5, wherein the weight values in the list are arranged based on an order of PRBs.

7. The method of claim 1, wherein the weight values are received via a radio resource control (RRC) signal.

8. The method of claim 1, wherein the predetermined signal includes at least one of:
a narrowband primary synchronization signal (NPSS),
a narrowband secondary synchronization signal (NSSS),
a narrowband physical broadcast channel (NPBCH) and
a system information block (SIB) for a narrowband.

9. A method of for performing a random access procedure, the method performed by a wireless device supporting a narrowband-internet of things (NB-IoT) radio access technology (RAT) and comprising:
receiving a list of carriers including a non-anchor physical resource block (PRB);
selecting a PRB to perform the random access procedure in the list; and
performing the random access procedure through the selected PRB.

10. The method of claim 9, wherein in the selection step, at least one of coverage extension (CE) level and the identifier of the wireless device are considered.

11. The method of claim 9, wherein in the selection step, timing information is further considered, and wherein the timing information includes a system frame number (SFN).

12. The method of claim 9, wherein the PRB to perform the random access comprises:
an uplink PRB to transmit a random access preamble, and
a downlink PRB to receive a random access response (RAR).

13. A wireless device for receiving a paging signal, the wireless device supporting a narrowband-internet of things (NB-IoT) radio access technology (RAT) and comprising:
a transceiver; and
a processor configured to control the transceiver and perform steps of:
receiving weight values for uneven paging distribution;
selecting one in a list of carriers, each of which includes a non-anchor physical resource block (PRB), according to the weight values; and
receiving the paging signal via the selected non-anchor PRB,
wherein the non-anchor PRB allows the wireless device to assume that at least one or more predetermined signals are to be not transmitted, but the paging signal is to be transmitted.

14. The wireless device of claim 13, wherein in the selection step, an identifier of the wireless device is used.

15. The wireless device of claim 13, wherein the processor is further configured to perform:
receiving the list of carriers.

16. The wireless device of claim 13, wherein the weight values are received in form of a list.

17. The wireless device of claim 16, wherein the weight values in the list are arranged based on an order of PRBs.

18. The wireless device of claim 13, wherein the weight values are received via a radio resource control (RRC) signal.

19. The wireless device of claim 13, wherein the predetermined signal includes at least one of:
a narrowband primary synchronization signal (NPSS),
a narrowband secondary synchronization signal (NSSS),
a narrowband physical broadcast channel (NPBCH), and
a system information block (SIB) for a narrowband.
